# EUROPEAN PATENT APPLICATION

(11) **EP 3 428 536 A1**
(43) Date of publication of application: **16.01.2019**
(21) Application number: 17763240.3
(22) Date of filing: 07.03.2017
(51) Int. Cl.: F23R 3/28, F23R 3/30

(54) **GAS TURBINE COMBUSTOR AND GAS TURBINE**

(30) Priority: 07.03.2016 JP 2016043589
(71) Applicant: Mitsubishi Heavy Industries, Ltd., Tokyo 108-8215 (JP)
(72) Inventor: FUKUBA, Shinichi, Tokyo 108-8215 (JP); MIYAMOTO, Kenji, Tokyo 108-8215 (JP); SAITO, Keijiro, Tokyo 108-8215 (JP); TAKIGUCHI, Satoshi, Tokyo 108-8215 (JP)
(74) Representative: Henkel, Breuer & Partner
(86) International application number: PCT/JP2017/008996
(87) International publication number: WO 2017/154900

(57) **Abstract**

A gas turbine combustor and a gas turbine, wherein there are provided a combustor outer cylinder (41), a combustor inner cylinder (42), a pilot nozzle (53) and a main nozzle (56) disposed in the combustor inner cylinder (42), an air channel (51) provided between the combustor outer cylinder (41) and the combustor inner cylinder (42), and pegs (58, 71) serving as a second fuel injection unit disposed in the air channel (51). The pegs (58, 71) are disposed in a curved part (41b) in communication with the combustor inner cylinder (42) on the downstream side of the air channel (51), and are disposed so that the base end part is supported on the inner surface of the curved part (41b), the tip part extends towards the combustor inner cylinder (42) side, and the longitudinal center line (O) is inclined with respect to a perpendicular line (P) orthogonal to a tangent (T) of the curved surface of the combustor outer cylinder (41) by a predetermined angle (θ) on the downstream side (or the upstream side) with respect to the flow direction of compressed air A flowing through the air channel (51).

## Description

### Field

The present invention relates to a gas turbine combustor used for a gas turbine that supplies fuel to compressed high-temperature and high-pressure air to perform combustion and supplies a generated combustion gas to a turbine to obtain rotational power, and to the gas turbine including the gas turbine combustor.

### Background

A typical gas turbine includes a compressor, a combustor, and a turbine. Air taken in through an air intake port is compressed by the compressor to be high-temperature and high-pressure compressed air. The combustor supplies fuel to the compressed air and performs combustion, thereby obtaining a high-temperature and high-pressure combustion gas (working fluid). The gas turbine drives the turbine with the combustion gas, thereby driving a generator coupled to the turbine.

In the combustor of the gas turbine having the configuration described above, an inner cylinder is supported in an external cylinder, and a transition piece is coupled to an end of the inner cylinder. The external cylinder, the inner cylinder, and the transition piece constitute a casing. The inner cylinder is provided with a pilot nozzle and a plurality of main fuel nozzles. The external cylinder is provided with a plurality of top hat nozzles on the inner peripheral surface. When an air flow of the compressed air comes into the inner cylinder through an air passage, the fuel is injected from the top hat nozzles. The air-fuel mixture is mixed with the fuel injected from the main fuel nozzles in the inner cylinder to be a swirling flow of a pre-mixture flowing into the transition piece. The air-fuel mixture is also mixed with the fuel injected from the pilot nozzle and ignited and burned. As a result, the air-fuel mixture is turned into a combustion gas, and the combustion gas is injected into the transition piece. As a result, the pre-mixture flowing into the transition piece from the main fuel nozzles is ignited and combusted.

Various gas turbine combustors have been developed, including the combustor described in Patent Literature 1, for example.

### Citation List

### Patent Literature

Patent Literature 1: Japanese Patent Application Laid-open No. 2005-233574

### Summary

### Technical Problem

Before the compressed air flows into the inner cylinder, the gas turbine combustor described above mixes in advance the fuel injected from the top hat nozzles with the compressed air flowing through the air passage. Consequently, the gas turbine combustor can mix the fuel and the air for combustion in the mixture more uniformly in the inner cylinder. The top hat nozzles, however, protrude perpendicularly to the flow of the compressed air. This structure causes separation of the flow around the top hat nozzles, thereby generating areas where the flow of the compressed air is slow downstream. As a result, the flame generated in the inner cylinder and the transition piece may possibly flash back, thereby damaging the top hat nozzles.

To address the disadvantages described above, an object of the present invention is to provide a gas turbine combustor and a gas turbine that suppresses flashback of a flame.

### Solution to Problem

To achieve the object described above, a gas turbine combustor of the present invention is a gas turbine combustor that includes an external cylinder having a tubular shape, an inner cylinder disposed in the external cylinder, a first fuel injecting unit disposed in the inner cylinder, an air passage provided between the external cylinder and the inner cylinder to cause compressed air to flow into the inner cylinder, and a second fuel injecting unit disposed in the air passage. The second fuel injecting unit is disposed at a curve communicating with the inner cylinder downstream in the air passage. The second fuel injecting unit has a base end supported by a curved inner surface of the external cylinder and a distal end extending toward the inner cylinder. The second fuel injecting unit is disposed with a center line in a longitudinal direction inclined to a downstream side or an upstream side in a flow direction of the compressed air flowing through the air passage at a predetermined angle with respect to a perpendicular orthogonal to a tangent to the curved inner surface of the external cylinder.

If the compressed air flows into the air passage, fuel is injected from the second fuel injecting unit to the compressed air to generate a mixture. The mixture flows into the inner cylinder. The fuel is injected from the first fuel injecting unit to the mixture to generate a pre-mixture. The second fuel injecting unit is inclined to the downstream side or the upstream side in the flow direction of the compressed air in the air passage. This structure can suppress separation of the flow around the second fuel injecting unit. Consequently, the present invention can reduce the number of areas where the flow of the compressed air is slow downstream of the second fuel injecting unit, thereby suppressing flashback of a flame.

In the gas turbine combustor, the second fuel injecting unit is disposed with the center line in the longitudinal direction inclined to the downstream side in the flow direction of the compressed air flowing through the air passage with respect to the perpendicular within a range from 10 degrees to 30 degrees.

The second fuel injecting unit is inclined to the downstream side in the flow direction of the compressed air within a range from 10 degrees to 30 degrees. With this structure, the second fuel injecting unit is less likely to be resistance to the flow of the compressed air. Consequently, the present invention can reduce the number of areas where the flow of the compressed air is slow downstream of the second fuel injecting unit.

In the gas turbine combustor, an inner surface of the external cylinder defining the air passage has a first linear portion extending in an axial direction of the external cylinder, a second linear portion extending in a direction orthogonal to the axial direction of the external cylinder, and a curve connecting the first linear portion and the second linear portion, and the base end of the second fuel injecting unit is supported closer to the downstream side in the flow direction of the compressed air flowing through the air passage than an intersection of extensions of the first linear portion and the second linear portion.

Consequently, the present invention can further suppress flashback of a flame. Furthermore, the change in the fuel injection position can improve the combustion stability.

In the gas turbine combustor, the second fuel injecting unit has a cylindrical shape and has a spherical shape on the distal end.

The second fuel injecting unit has a cylindrical shape and has a spherical shape on the distal end. Consequently, the present invention can suppress separation of the compressed air caused by the second fuel injecting unit and reduce the number of areas having slow flow velocity in the wake of the second fuel injecting unit.

A gas turbine of the present invention includes a compressor configured to compress air, a combustor configured to mix compressed air compressed by the compressor with fuel to perform combustion, and a turbine configured to obtain rotational power from a combustion gas generated by the combustor. As the combustor, the gas turbine combustor is used.

In the combustor, the second fuel injecting unit disposed in the air passage provided between the external cylinder and the inner cylinder is inclined to the downstream side or the upstream side in the flow direction of the compressed air at the predetermined angle. This structure can suppress separation of the flow around the second fuel injecting unit. Consequently, the present invention can reduce the number of areas where the flow of the compressed air is slow downstream of the second fuel injecting unit, thereby suppressing flashback of a flame. Advantageous Effects of Invention

In the gas turbine combustor and the gas turbine according to the present invention, the second fuel injecting unit disposed in the air passage provided between the external cylinder and the inner cylinder is inclined to the downstream side or the upstream side in the flow direction of the compressed air at the predetermined angle. Consequently, the present invention can reduce the number of areas where the flow of the compressed air is slow downstream of the second fuel injecting unit, thereby suppressing flashback of a flame.

### Brief Description of Drawings

FIG. 1 is a sectional view along line I-I of FIG. 7 and illustrates an attachment state of a peg in a gas turbine combustor according to the present embodiment.
FIG. 2 is a schematic for explaining an attachment angle of the peg.
FIG. 3 is a sectional view of a modification of the peg according to the present embodiment.
FIG. 4 is a schematic configuration diagram of a gas turbine according to the present embodiment.
FIG. 5 is a schematic of the gas turbine combustor. FIG. 6 is a schematic of a principal part of the gas turbine combustor.
FIG. 7 is a sectional view along line VII-VII of FIG. 6.

### Description of Embodiments

Exemplary embodiments of a gas turbine combustor and a gas turbine according to the present invention are described below in greater detail with reference to the accompanying drawings. The embodiments are not intended to limit the present invention. If there are a plurality of embodiments, the present invention includes a combination of the embodiments.

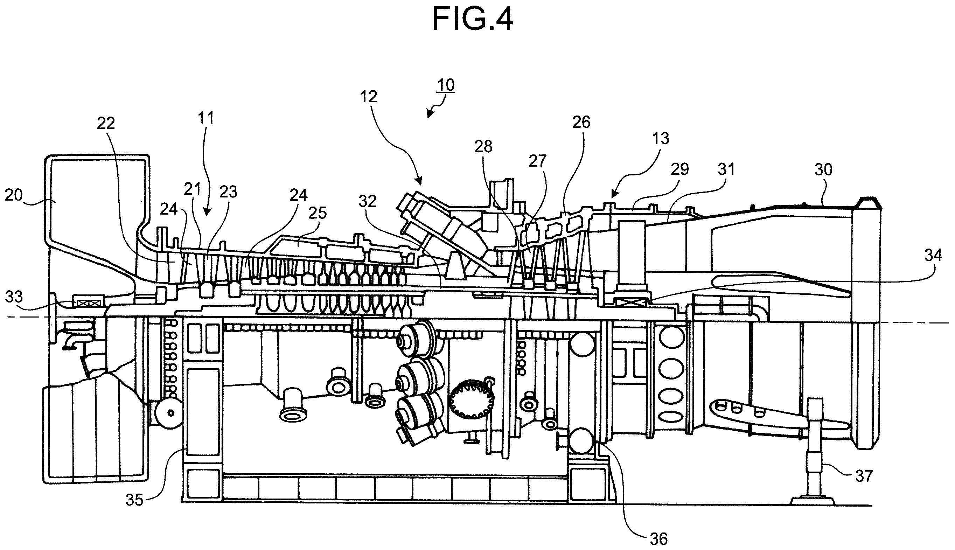

FIG. 4 is a schematic configuration diagram of the gas turbine according to the present embodiment.

As illustrated in FIG. 4, a gas turbine 10 according to the present embodiment includes a compressor 11, a combustor 12, and a turbine 13. A generator, which is not illustrated, is coaxially coupled to the gas turbine 10 and can generate electricity.

The compressor 11 has an air intake port 20 through which air is taken in. In a compressor casing 21, an inlet guide vane (IGV) 22 is disposed, and a plurality of compressor vanes 23 and compressor blades 24 are alternately disposed in the longitudinal direction (axial direction of a rotor 32, which will be described later). A bleed air chamber 25 is provided outside the compressor casing 21. The combustor 12 supplies fuel to compressed air compressed by the compressor 11 and ignites the fuel and the compressed air, thereby performing combustion. The turbine 13 includes a plurality of turbine vanes 27 and turbine blades 28 alternately disposed in the longitudinal direction (axial direction of the rotor 32, which will be described later) in a turbine casing 26. A flue gas chamber 30 is provided downstream of the turbine casing 26 with a flue gas casing 29 provided therebetween. The flue gas chamber 30 includes a flue gas diffuser 31 connected to the turbine 13.

The rotor (rotating shaft) 32 is provided penetrating the center of the compressor 11, the combustor 12, the turbine 13, and the flue gas chamber 30. The end of the rotor 32 on the compressor 11 side is rotatably supported by a bearing 33, and the end thereof on the flue gas chamber 30 side is rotatably supported by a bearing 34. In the compressor 11, a plurality of disks provided with the respective compressor blades 24 are stacked and fixed on the rotor 32. In the turbine 13, a plurality of disks provided with the respective turbine blades 28 are stacked and fixed on the rotor 32. The end of the rotor 32 on the flue gas chamber 30 side is coupled to a drive shaft of the generator, which is not illustrated.

In the gas turbine 10, the compressor casing 21 of the compressor 11 is supported by a leg 35, the turbine casing 26 of the turbine 13 is supported by a leg 36, and the flue gas chamber 30 is supported by a leg 37.

Air taken in from the air intake port 20 of the compressor 11 passes by the IGV 22, the compressor vanes 23, and compressor blades 24 and is compressed, thereby becoming high-temperature and high-pressure compressed air. The combustor 12 supplies predetermined fuel to the compressed air and performs combustion. The high-temperature and high-pressure combustion gas serving as working fluid generated by the combustor 12 passes by the turbine vanes 27 and the turbine blades 28 of the turbine 13, thereby driving and rotating the rotor 32. As a result, the generator coupled to the rotor 32 is driven. The combustion gas that drives the turbine 13 is released to the atmosphere as a flue gas.

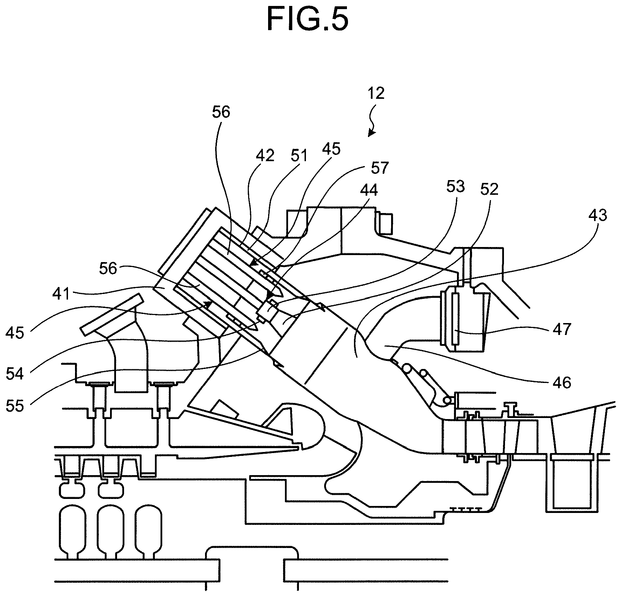

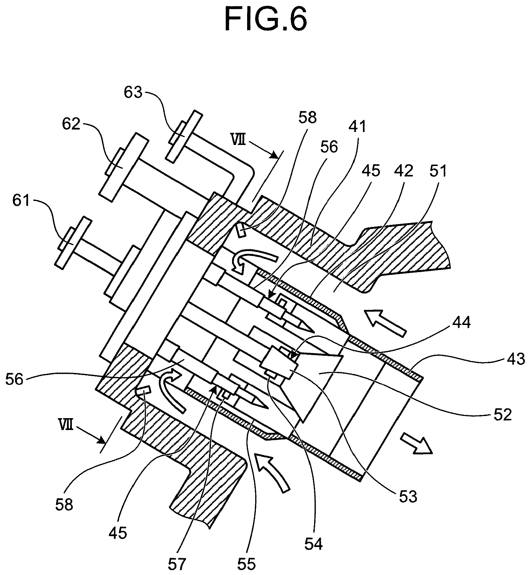

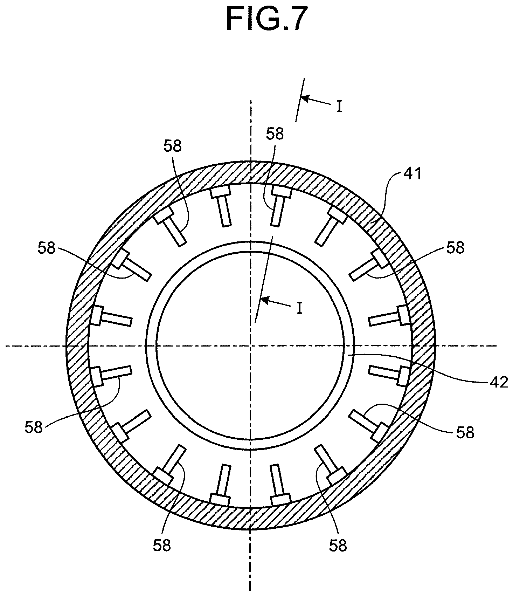

The following describes the combustor (gas turbine combustor) according to the present embodiment in greater detail. FIG. 5 is a schematic of the gas turbine combustor. FIG. 6 is a schematic of a principal part of the gas turbine combustor. FIG. 7 is a sectional view along line VII-VII of FIG. 6.

In the combustor 12, as illustrated in FIG. 5, an inner cylinder 42 is supported in an external cylinder 41 with a predetermined gap interposed therebetween. A transition piece 43 is coupled to an end of the inner cylinder 42. The external cylinder 41, the inner cylinder 42, and the transition piece 43 constitute a combustor casing. The inner cylinder 42 includes a pilot combustion burner 44 and a plurality of main combustion burners 45. The pilot combustion burner 44 is positioned at the center of the inside of the inner cylinder 42. The main combustion burners 45 are disposed surrounding the pilot combustion burner 44 along the circumferential direction on the inner peripheral surface of the inner cylinder 42. The transition piece 43 is coupled to a bypass pipe 46. The bypass pipe 46 is provided with a bypass valve 47.

Specifically, as illustrated in FIG. 6, the base end of the inner cylinder 42 is attached to the base end of the external cylinder 41, thereby defining an air passage 51 therebetween. In the inner cylinder 42, the pilot combustion burner 44 is positioned at the center of the inside thereof, and the main combustion burners 45 are disposed around the pilot combustion burner 44. The pilot combustion burner 44 includes a pilot cone 52, a pilot nozzle (first fuel injecting unit) 53, and a swirler vane 54. The pilot cone 52 is supported by the inner cylinder 42. The pilot nozzle 53 is disposed in the pilot cone 52. The swirler vane 54 is provided on the outer periphery of the pilot nozzle 53. The main combustion burners 45 each include a burner cylinder 55, a main nozzle (first fuel injecting unit) 56, and a swirler vane 57. The main nozzle 56 is disposed in the burner cylinder 55. The swirler vane 57 is provided on the outer periphery of the main nozzle 56.

The air passage 51 having a ring shape is formed between the external cylinder 41 and the inner cylinder 42. A plurality of pegs (fuel injecting unit) 58 are provided in the air passage 51. As illustrated in FIG. 7, base ends of the pegs 58 are fixed to the external cylinder 41, and distal ends thereof extend toward the inner cylinder 42. The pegs 58 are disposed at predetermined intervals in the circumferential direction of the external cylinder 41.

As illustrated in FIG. 6, the external cylinder 41 has a pilot fuel port 61, a main fuel port 62, and a top hat fuel port 63. The pilot fuel port 61, the main fuel port 62, and the top hat fuel port 63 are connected to the pilot nozzle 53, the main nozzles 56, and the pegs 58, respectively. A pilot fuel line, which is not illustrated, is coupled to the pilot fuel port 61. A main fuel line, which is not illustrated, is coupled to each main fuel port 62. A top hat fuel line, which is not illustrated, is coupled to each top hat fuel port 63.

If an air flow of high-temperature and high-pressure compressed air comes into the air passage 51, fuel F is injected from the pegs 58 to the compressed air to generate a mixture. The mixture flows into the inner cylinder 42. The mixture flowing into the inner cylinder 42 is mixed with the fuel F injected from the main combustion burners 45 to be a swirling flow of a pre-mixture. The mixture is also mixed with the fuel F injected from the pilot combustion burner 44 and ignited and burned, which is not illustrated. As a result, the mixture is turned into a combustion gas, and the combustion gas is injected into the inner cylinder 42. At this time, part of the combustion gas is injected into the inner cylinder 42 in a manner diffusing around with a flame. As a result, the pre-mixture flowing into the inner cylinder 42 from the main combustion burners 45 is ignited and combusted. In other words, a diffusion flame generated by the pilot fuel F injected from the pilot combustion burner 44 can perform flame holding for stable combustion of lean premixed fuel F supplied from the main combustion burners 45.

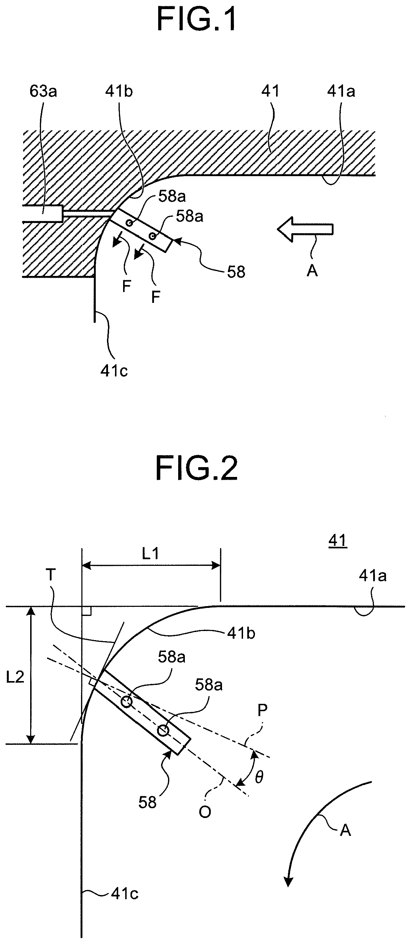

The following describes the peg 58 in greater detail. FIG. 1 is a sectional view along line I-I of FIG. 7 and illustrates an attachment state of the peg in the gas turbine combustor according to the present embodiment. FIG. 2 is a schematic for explaining an attachment angle of the peg.

As illustrated in FIG. 1, the peg 58 is disposed at a curve communicating with the inner cylinder 42 downstream in the air passage 51. The base end of the peg 58 is supported by the curved inner surface of the external cylinder 41, and the distal end thereof extends toward the inner cylinder 42. The peg 58 has a cylindrical shape and has a fuel passage, which is not illustrated, inside thereof. One end of the fuel passage communicates with a supply hole 63a connected to the top hat fuel port 63, and the other end thereof communicates with a plurality of injection holes 58a opening to the outside of the peg 58.

As illustrated in FIG. 2, the inner surface of the external cylinder 41 defining the air passage 51 has a first linear portion 41a, a second linear portion 41c, and a curve 41b. The first linear portion 41a extends in the axial direction of the external cylinder 41. The second linear portion 41c extends in a direction (radial direction of the external cylinder 41) orthogonal to the axial direction of the external cylinder 41. The curve 41b connects the first linear portion 41a and the second linear portion 41c. In other words, the extension of the first linear portion 41a and the extension of the second linear portion 41c intersect at right angles (90 degrees) at the intersection of lengths L1 and L2, respectively. The base end of the peg 58 is fixed to the curve 41b, that is, a range of the length L1 extending along the first linear portion 41a and the length L2 extending along the second linear portion 41c.

The peg 58 is disposed with its center line O in the longitudinal direction inclined to the downstream side in the flow direction of compressed air A flowing through the air passage 51 at a predetermined angle θ with respect to a perpendicular P orthogonal to a tangent T to the inner surface of the curve 41b of the external cylinder 41. The inclination angle θ is preferably from 10 degrees to 40 degrees and is most preferably approximately 30 degrees.

The base end of the peg 58 is supported closer to the downstream side in the flow direction of the compressed air A flowing through the air passage 51 than the intersection of the extensions of the first linear portion 41a and the second linear portion 41c.

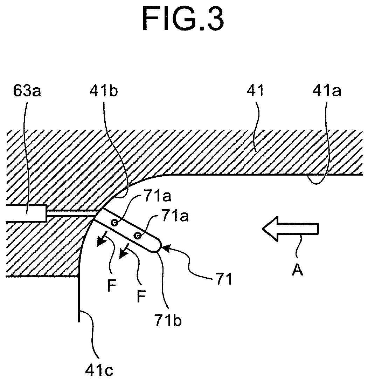

The peg 58 does not necessarily have the shape described above. FIG. 3 is a sectional view of a modification of the peg according to the present embodiment.

As illustrated in FIG. 3, a peg 71 is disposed at the curve 41b in the external cylinder 41 defining the air passage 51 and extends toward the inner cylinder 42. The peg 71 has a cylindrical shape and has a fuel passage, which is not illustrated, inside thereof. One end of the fuel passage communicates with the supply hole 63a connected to the top hat fuel port 63, and the other end thereof communicates with a plurality of injection holes 71a opening to the outside of the peg 71. The peg 71 has a spherical portion 71b having a spherical shape on the distal end.

The pegs 58 and 71 do not necessarily have the shape described above. The pegs 58 and 71 may have a polygonal columnar shape or an elliptic cylindrical shape or be tapered, thickened toward the end, or stepped, for example. While the pegs 58 and 71 are disposed with their center line O in the longitudinal direction inclined to the downstream side in the flow direction of the compressed air A with respect to the perpendicular P, they may be disposed with their center line O in the longitudinal direction inclined to the upstream side in the flow direction of the compressed air A with respect to the perpendicular P.

If the compressed air A flows into the air passage 51, the fuel F is injected from the pegs 58 and 71 to the compressed air A to generate a mixture. The mixture flows into the inner cylinder 42 and is mixed with the fuel F injected from the pilot nozzle 53 and the main nozzles 56. The pegs 58 and 71 are inclined to the downstream side in the flow direction of the compressed air A in the air passage 51. This structure can suppress separation of the flow around a second fuel injecting unit. As a result, the number of areas where the flow of the compressed air A is slow downstream of the pegs 58 and 71 is reduced, thereby suppressing flashback of a flame from the inner cylinder 42.

As described above, the gas turbine combustor according to the present embodiment includes the external cylinder 41, the inner cylinder 42, the pilot nozzle 53, the main nozzles 56, the air passage 51, and the pegs 58 and 71. The pilot nozzle 53 and the main nozzles 56 are disposed in the inner cylinder 42. The air passage 51 is provided between the external cylinder 41 and the inner cylinder 42. The pegs 58 and 71 are disposed in the air passage 51. The pegs 58 and 71 are disposed at the curve 41b communicating with the inner cylinder 42 downstream in the air passage 51. The base end of the pegs 58 and 71 is supported by the inner surface of the curve 41b, and the distal end thereof extends toward the inner cylinder 42. The pegs 58 and 71 are disposed with their center line O in the longitudinal direction inclined to the downstream side (or upstream side) in the flow direction of the compressed air A flowing through the air passage 51 at the predetermined angle θ with respect to the perpendicular P orthogonal to the tangent T to the curved surface of the external cylinder 41.

This structure can suppress separation of the flow around the pegs 58 and 71. Consequently, the present embodiment can reduce the number of areas where the flow of the compressed air A is slow downstream of the pegs 58 and 71, thereby suppressing flashback of a flame.

In the gas turbine combustor according to the present embodiment, the pegs 58 and 71 are inclined to the downstream side in the flow direction of the compressed air A within a range from 10 degrees to 30 degrees. With this structure, the pegs 58 and 71 are less likely to be resistance to the flow of the compressed air A. Consequently, the present embodiment can reduce the number of areas where the flow of the compressed air A is slow downstream of the pegs 58 and 71.

In the gas turbine combustor according to the present embodiment, the inner surface of the external cylinder 41 defining the air passage 51 has the first linear portion 41a, the second linear portion 41c, and the curve 41b. The first linear portion 41a extends in the axial direction of the external cylinder 41. The second linear portion 41c extends in a direction orthogonal to the axial direction of the external cylinder 41. The curve 41b connects the first linear portion 41a and the second linear portion 41c. The base end of the pegs 58 and 71 is supported closer to the downstream side in the flow direction of the compressed air A flowing through the air passage 51 than the intersection of the extensions of the first linear portion 41a and the second linear portion 41c. Consequently, the present embodiment can further suppress flashback of a flame. Furthermore, the change in the fuel injection position can improve the combustibility.

In the gas turbine combustor according to the present embodiment, the peg 71 has a cylindrical shape and has the spherical portion 71b on the distal end. With this structure, the peg 71 is less likely to be resistance to the flow of the compressed air A. Consequently, the present embodiment can suppress separation of the compressed air A caused by the peg 71 and reduce the number of areas having slow flow velocity in the wake of the second fuel injecting unit.

The gas turbine according to the present embodiment includes the compressor 11, the combustor 12, and the turbine 13. The compressor 11 compresses air. The combustor 12 mixes the compressed air A compressed by the compressor 11 with the fuel F and performs combustion. The turbine 13 obtains rotational power from the combustion gas generated by the combustor 12. The combustor 12 includes the pegs 58 and 71 disposed at the curve 41b of the air passage 51. The pegs 58 and 71 are inclined to the downstream side (or upstream side) in the flow direction of the compressed air A flowing through the air passage 51 at the predetermined angle θ.

With this structure, the present embodiment can suppress separation of the flow around the pegs 58 and 71. As a result, the amount of compressed air flowing around the pegs 58 and 71 is reduced, thereby reducing the number of areas where the flow of the compressed air A is slow downstream of the pegs 58 and 71. Consequently, the present embodiment can suppress flashback of a flame.

While the pegs 58 and 71 according to the present embodiment are disposed at the curve 41b communicating with the inner cylinder 42 downstream in the air passage 51, they may be disposed at the linear portion 41a or 41b instead of the curve 41b.

### Reference Signs List

- 10: Gas turbine
- 11: Compressor
- 12: Combustor
- 13: Turbine
- 41: External cylinder
- 41a: First linear portion
- 41b: Curve
- 41c: Second linear portion
- 42: Inner cylinder
- 43: Transition piece
- 44: Pilot combustion burner
- 45: Main combustion burner
- 51: Air passage
- 53: Pilot nozzle (first fuel injecting unit)
- 56: Main nozzle (first fuel injecting unit)
- 58, 71: Peg (second fuel injecting unit)
- 58a, 71a: Injection hole
- 71b: Spherical portion
- A: Compressed air
- F: Fuel
- L1, L2: Length
- O: Center line
- P: Perpendicular
- T: Tangent
- θ: Inclination angle

## Claims

1. A gas turbine combustor comprising:
an external cylinder having a tubular shape;
an inner cylinder disposed in the external cylinder;
a first fuel injecting unit disposed in the inner cylinder;
an air passage provided between the external cylinder and the inner cylinder to cause compressed air to flow into the inner cylinder; and
a second fuel injecting unit disposed in the air passage, wherein
the second fuel injecting unit is disposed at a curve communicating with the inner cylinder downstream in the air passage, the second fuel injecting unit having a base end supported by a curved inner surface of the external cylinder and a distal end extending toward the inner cylinder, and
the second fuel injecting unit is disposed with a center line in a longitudinal direction inclined to a downstream side or an upstream side in a flow direction of the compressed air flowing through the air passage at a predetermined angle with respect to a perpendicular orthogonal to a tangent to the curved inner surface of the external cylinder.

2. The gas turbine combustor according to claim 1, wherein the second fuel injecting unit is disposed with the center line in the longitudinal direction inclined to the downstream side in the flow direction of the compressed air flowing through the air passage with respect to the perpendicular within a range from 10 degrees to 30 degrees.

3. The gas turbine combustor according to claim 1 or 2, wherein an inner surface of the external cylinder defining the air passage has a first linear portion extending in an axial direction of the external cylinder, a second linear portion extending in a direction orthogonal to the axial direction of the external cylinder, and a curve connecting the first linear portion and the second linear portion, and the base end of the second fuel injecting unit is supported closer to the downstream side in the flow direction of the compressed air flowing through the air passage than an intersection of extensions of the first linear portion and the second linear portion.

4. The gas turbine combustor according to any one of claims 1 to 3, wherein the second fuel injecting unit has a cylindrical shape and has a spherical shape on the distal end.

5. A gas turbine comprising:
a compressor configured to compress air;
a combustor configured to mix compressed air compressed by the compressor with fuel to perform combustion; and
a turbine configured to obtain rotational power from a combustion gas generated by the combustor, wherein
as the combustor, the gas turbine combustor according to any one of claims 1 to 4 is used.
